# EUROPÄISCHE PATENTSCHRIFT

(11) **EP 2 966 828 B1**
(45) Veröffentlichungstag und Bekanntmachung des Hinweises auf die Patenterteilung: **15.01.2020**
(21) Anmeldenummer: 14176736.8
(22) Anmeldetag: 11.07.2014
(51) Int. Cl.: H04L 29/06

(54) **Verfahren zum Erkennen eines Angriffs auf eine mit einem Kommunikationsnetzwerk verbundene Arbeitsumgebung**
Method for detecting an attack on a work environment connected with a communications network
Procédé de reconnaissance d'une attaque dans un environnement de travail relié à un réseau de communication

(43) Veröffentlichungstag der Anmeldung: 13.01.2016
(73) Patentinhaber: Deutsche Telekom AG, 53113 Bonn (DE)
(72) Erfinder: Ochse, Marco, 61273 Wehrheim (DE)
(74) Vertreter: Nern, Peter-Michael

(56) Entgegenhaltungen:
- US-A1- 2004 172 557
- US-A1- 2006 018 466
- US-A1- 2012 084 866
- US-A1- 2013 145 465
- Martin Roesch: "Snort Users Manual Snort Release: 1.8.3", , 6 November 2001 (2001-11-06), XP055015709, Retrieved from the Internet: URL:http://www.forum-intrusion.com/snort/S nortUsersManual.pdf [retrieved on 2012-01-04]

## Beschreibung

Die vorliegende Erfindung betrifft ein Verfahren zum Erkennen eines Angriffs auf eine mit einem Kommunikationsnetzwerk verbundene Arbeitsumgebung und ein Netzwerksicherheitssystem mit einer Arbeitsumgebung und einem Netzwerksicherheitselement zur Erkennung eines derartigen Angriffs.

Auf Arbeitsplatzrechnersystemen bzw. Arbeitsumgebungen oder Arbeitsplatzumgebungen in Unternehmen sind oft sensible Daten gespeichert, die für einen Angreifer interessant sein können. Der Diebstahl von Unternehmensgeheimnissen geschieht oft unbemerkt durch Einschleusung von Schadprogrammen in das unternehmenseigene Computernetzwerk oder durch Ausspähung von Arbeitsumgebungen geeigneter Personengruppen, beispielsweise des Vorstands eines Unternehmens oder wichtiger Personen der Öffentlichkeit. Dabei kommen bei derartigen Angriffen teilweise selbstentwickelte und individuell für den konkreten Einsatz angepasste Schadprogramme zum Einsatz, die von den am Markt erhältlichen Äntivirenprodukten nicht oder erst sehr spät erkannt werden. Als potentielles Opfer eines digitalen Spionageangriffs können sich potentiell gefährdete Personengruppen im Unternehmen zwar vorbereiten, jedoch sind die genauen Umstände wie z.B. Ort, Zeitpunkt und Ausgestaltung meist unbekannt.

Die einschlägigen Dokumente US 2012/084866, US 2013/145465, US 2006/018466 und US 2004/172557 betreffen Systeme zur Erkennung von Angriffen durch Honigtöpfe. Dokument "Martin Roesch: Snort Users Manua, I Snort Release: 1.8.3" beschreibt ein Produkt zum Erkennen von Angriffen auf Netzwerke.

Es ist die Aufgabe der vorliegenden Erfindung, einen Angriff in einem Computernetzwerk, insbesondere auf ein Arbeitsplatzrechnersystem des Computernetzwerks, zu erkennen. Diese Aufgabe wird durch die Merkmale der unabhängigen Ansprüche gelöst. Vorteilhafte Weiterbildungsformen sind Gegenstand der abhängigen Ansprüche.

Die im Folgenden vorgestellten Verfahren und Systeme können zum Schutz von Arbeitsumgebungen verwendet werden. Eine Arbeitsumgebung bezeichnet hierbei ein Rechnersystem in einem Computernetzwerk, das für einen individuellen Nutzer oder eine individuelle Nutzergruppe eingerichtet ist. Beispielsweise können die Mitarbeiter eines Unternehmens Arbeitsumgebungen nutzen, um ihre unternehmensbezogenen Aufgaben zu verrichten. Die Arbeitsumgebung kann einen oder mehrere Arbeitsplatzrechner umfassen, beispielsweise einen PC, eine Workstation, ein Notebook, ein PDA, ein Smartphone, die mit einem Kommunikationsnetzwerk verbunden sind. Das Kommunikationsnetzwerk kann ein drahtgebundenes Netzwerk sein, beispielsweise unter Verwendung von Ethernet, USB oder Kabel, etc. Das Kommunikationsnetzwerk kann ein drahtloses Netzwerk sein, beispielsweise unter Nutzung von WLAN, WiFi, Bluetooth, Infrarot oder eines Mobilfunkstandards wie beispielsweise LTE, UMTS, GSM, etc.

Die im Folgenden vorgestellten Verfahren und Systeme können eingesetzt werden, um ein Computernetzwerk, insbesondere eine Arbeitsumgebung in einem Computernetzwerk, vor Angriffen aus Botnetzen zu schützen, insbesondere vor DDoS-Angriffen, Spamming-Angriffen, Sniffing-Angriffen, Phishing-Angriffen, Verbreiten von Malware, Key-Logging, Installieren unerwünschter Software, Identitätsdiebstahl, Manipulation des Computernetzwerks, etc.

Die im Folgenden vorgestellten Verfahren und Systeme können im Bereich der Informationstechnologie (IT) eingesetzt werden. Informationstechnologie ist ein Oberbegriff für die Informations- und Datenverarbeitung sowie für die dafür benötigte Hard- und Software. Die Informationstechnologie eines Unternehmens umfasst sämtliche technischen Einrichtungen zur Erzeugung, Verarbeitung und Weiterleitung von Informationen.

Die im Folgenden vorgestellten Verfahren und Systeme können von verschiedener Art sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Die Grundidee, auf der die Erfindung basiert, ist die Erkennung eines möglichen oder bevorstehenden Angriffs auf das Computernetzwerk basierend auf einer zielgerichteten Anlockung eines Angreifers nach Art eines Honigtopfes, d.h. auf ein Netzwerksicherheitselement, das eine bestimmte für den Angreifer wertvolle Arbeitsumgebung emuliert. Während der Angreifer versucht, auf diese emulierte Arbeitsumgebung zuzugreifen, kann das System die so ausgeführten Aktivitäten des Angreifers aufzeichnen und basierend darauf eine Charakteristik des Angriffs bzw. des Angreifers ermitteln. Mittels dieser Charakteristik können ähnliche Angriffe erkannt und/oder abgewehrt werden.

Gemäß einem ersten Aspekt betrifft die Erfindung ein Verfahren zum Erkennen eines Angriffs auf eine mit einem Kommunikationsnetzwerk verbundene Arbeitsumgebung, mit folgenden Schritten: elektronisches Emulieren der Arbeitsumgebung durch ein mit dem Kommunikationsnetzwerk verbundenes Netzwerksicherheitselement; Erfassen eines Netzwerkverkehrs an dem Netzwerksicherheitselement; Vergleichen des erfassten Netzwerkverkehrs mit einem vorgegebenen Netzwerkverkehr; und Auslösen eines ersten Angriffswarnsignals bei einer Abweichung zwischen dem erfassten Netzwerkverkehr und dem vorgegebenen Netzwerkverkehr.

Der Vorteil eines solchen Verfahrens liegt darin, dass durch das Emulieren der Arbeitsumgebung durch das Netzwerksicherheitselement ein Angreifer dazu verleitet wird, seinen Angriff auf das Netzwerksicherheitselement zu richten, so dass die reale Arbeitsumgebung geschützt ist. Der Netzwerkverkehr an dem Netzwerksicherheitselement kann daher erfasst und ausgewertet werden. Das Vergleichen mit einem vorgegebenen Netzwerkverkehr bietet eine einfache Möglichkeit, eine Unregelmäßigkeit zu erkennen, die auf einen Angriff hindeutet. Der Vorteil eines solchen Verfahrens liegt daher in der schützenden Wirkung bezüglich der realen Arbeitsplatzumgebung als auch in der schnellen Reaktionsfähigkeit, einen Angriff auf eine Arbeitsplatzumgebung zu erkennen und davor zu warnen.

Gemäß einer Ausführungsform umfasst das Erfassen des Netzwerkverkehrs ein Erfassen einer Zugriffsrate auf das Netzwerksicherheitselement und das Vergleichen des erfassten Netzwerkverkehrs mit dem vorgegebenen Netzwerkverkehr ein Vergleichen der erfassten Zugriffsrate mit einer vorgegebenen Zugriffsrate.

Der Vorteil liegt darin, dass die vorgegebene Zugriffsrate leicht bestimmt werden kann, indem etwa Aktivitäten eines typischen Nutzers der Arbeitsumgebung statistisch ausgewertet werden. Erfolgt ein Angriff auf die Arbeitsumgebung bzw. auf das Netzwerksicherheitselement, so erhöht sich die Zugriffsrate in signifikanter Weise, was leicht und zuverlässig festgestellt werden kann.

Gemäß einer Ausführungsform umfasst das elektronische Emulieren der Arbeitsumgebung ein Emulieren einer ungeschützten Arbeitsumgebung, die zumindest Teile der gleichen Software umfasst wie auf der Arbeitsumgebung installiert sind.

Dies hat den Vorteil, dass ein Angreifer dann die gleiche Software auf dem Netzwerksicherheitselement vorfindet und denkt, es handele sich um eine für ihn interessante Arbeitsplatzumgebung. Der Angreifer wird somit seine Aktivitäten auf die Erforschung des Netzwerksicherheitselements richten im Glauben es handele sich um eine reale Arbeitsplatzumgebung.

Gemäß einer Ausführungsform ist die Arbeitsumgebung geschützt und das elektronische Emulieren umfasst eine Simulation einer ungeschützten Arbeitsumgebung.

Dies hat den Vorteil, dass die Simulation einer ungeschützten Arbeitsumgebung von der bzw. den geschützten Arbeitsumgebung/en ablenkt und einen Angreifer auf sich lenken kann.

Gemäß einer Ausführungsform ist zwischen die Arbeitsumgebung und das Kommunikationsnetzwerk ein Netzwerkverbindungselement zwischengeschaltet und an das Netzwerkverbindungselement ein Netzwerküberwachungselement angeschaltet und das Verfahren umfasst ein Kopieren eines Netzwerkverkehrs an dem Netzwerkverbindungselement zu dem Netzwerküberwachungselement.

Dies hat den Vorteil, dass der gesamte Netzwerkverkehr von und zu der Arbeitsumgebung über das Netzwerkverbindungselement läuft, wo er leicht kopiert werden kann und dem Netzwerküberwachungselement zur weiteren Auswertung zugeführt werden kann. Damit können alle Aktivitäten des Angreifers, die auf die Arbeitsumgebung gerichtet sind, von dem Netzwerküberwachungselement erfasst werden.

Gemäß einer Ausführungsform umfasst das Verfahren ein Erfassen des Netzwerkverkehrs an dem Netzwerkverbindungselement durch das Netzwerküberwachungselement; und ein Auslösen eines zweiten Angriffswarnsignals bei Erkennung einer Anomalie in dem an dem Netzwerkverbindungselement erfassten Netzwerkverkehr.

Dies hat den Vorteil, dass ein zweites Angriffswarnsignal unabhängig von dem ersten Angriffswarnsignal erzeugt wird und damit die Erkennung eines Angriffs noch zuverlässiger ausgeführt wird. Das zweite Angriffswarnsignal basiert auf der Erkennung einer Anomalie in dem Netzwerkverkehr an dem Netzwerkverbindungselement, d.h. dem übergeordneten Netzwerkverkehr, während das erste Angriffswarnsignal auf dem Vergleich des arbeitsplatzbezogenen Netzwerkverkehrs an dem Netzwerksicherheitselement mit einem vorgegebenen Netzwerkverkehr, d.h. einem Referenznetzwerkverkehr basiert

Gemäß einer Ausführungsform basiert das Erkennen der Anomalie auf einem Detektieren von anormalen Suchvorgängen in dem erfassten Netzwerkverkehr.

Dies hat den Vorteil, dass das Erkennen anormaler Suchvorgänge zuverlässig auf einen stattfindenden oder bevorstehenden Angriff hinweist. Die Computer eines Computernetzwerks erzeugen stets eine Vielzahl von Warnmeldungen, beispielsweise bei nicht funktionierendem Software-Update, wenn der Prozessor überlastet ist, wenn ein Update der Software bisher nicht durchgeführt wurde, wenn ein Passwort falsch eingegeben wurde, wenn der Zugriff auf das Internet vorübergehend nicht möglich ist, wenn der Zugriff auf bestimmte Daten nicht möglich ist, etc. Diese Warnmeldungen sind bedingt durch bestimmte Anomalien des Computernetzwerks, die während des Betriebs häufiger oder weniger häufig vorkommen und zumeist eine Interaktion des Benutzers erfordern, um sie zu beheben. Bei anormalen Suchvorgängen dagegen handelt es sich nicht um typische Funktionen des Systems. Sie sind als kritisch zu beurteilen und deuten auf einen Missbrauch des Computers hin. Anhand so erkannter anormaler Suchvorgänge kann zuverlässig ein Angriff detektiert werden.

Gemäß einer Ausführungsform umfasst das Verfahren ein Aufzeichnen des an dem Netzwerkverbindungselement erfassten Netzwerkverkehrs in Echtzeit bei Erkennung der Anomalie.

Dies hat den Vorteil, dass die Handlungen des Angreifers sofort aufgezeichnet und analysiert werden können, sofern eine Anomalie auf einen bevorstehenden Angriff hindeutet. Das Sicherheitssystem kann schnell handeln, die Reaktionszeiten sind sehr kurz.

Gemäß einer Ausführungsform umfasst das Verfahren ein Erzeugen einer Warnmeldung basierend auf dem ersten Angriffswarnsignal und dem zweiten Angriffswarnsignal.

Dies hat den Vorteil, dass die Warnmeldung besonders zuverlässig ist, wenn sie auf zwei unabhängig voneinander bestimmten Angriffswarnsignalen, nämlich dem ersten Angriffswarnsignal und dem zweiten Angriffswarnsignal basiert.

Gemäß einer Ausführungsform basiert das Erzeugen der Warnmeldung ferner auf weiteren Angriffswarnsignalen von weiteren Arbeitsumgebungen des Kommunikationsnetzwerks.

Wenn das Erzeugen der Warnmeldung ferner auf weiteren Angriffswarnsignalen von weiteren Arbeitsumgebungen des Kommunikationsnetzwerks, ist die Warnmeldung noch zuverlässiger, da weitere Informationen dazu herangezogen werden.

Gemäß einer Ausführungsform umfasst das Verfahren ferner ein Protokollieren des erfassten Netzwerkverkehrs an dem Netzwerksicherheitselement durch einen Protokollserver bei Auslösen des ersten Angriffswarnsignals; und ein Protokollieren des erfassten Netzwerkverkehrs an dem Netzwerkverbindungselement durch den Protokollserver bei Auslösen des zweiten Angriffswarnsignals.

Dies hat den Vorteil, dass bei Protokollieren des an beiden Netzwerkelementen erfassten Netzwerkverkehrs dieser für weitere Analysen zur Verfügung steht. Damit kann die Analyse des Angriffsmusters genauer ausgeführt werden und es können zuverlässigere Vorhersagen bezüglich zukünftiger Angriffe gemacht werden.

Gemäß einer Ausführungsform umfasst das Verfahren ein Erkennen von charakteristischen Eigenschaften des Angriffs basierend auf dem protokollierten Netzwerkverkehr an dem Netzwerksicherheitselement und dem protokollierten Netzwerkverkehr an dem Netzwerkverbindungselement.

Dies hat den Vorteil, dass charakteristische Eigenschaften des Angriffs dazu genutzt werden können, um weitere Angriffe, welche auf derselben Angriffscharakteristik basieren, leicht und ohne großen Aufwand zu erkennen.

Gemäß einem zweiten Aspekt betrifft die Erfindung ein Netzwerksicherheitssystem mit: einem Netzwerkverbindungselement 105, das ausgelegt ist, eine Verbindung mit einem Kommunikationsnetz 115 herzustellen; und einem mit dem Netzwerkverbindungselement 105 verbundenen Netzwerksicherheitselement 103, wobei zumindest eine Arbeitsumgebung 101 mit dem Netzwerkverbindungselement 105 verbindbar ist, um die zumindest eine Arbeitsumgebung 101 mit dem Kommunikationsnetz 115 zu verbinden, und wobei das Netzwerksicherheitselement 103 ausgelegt ist, einen Angriff auf die zumindest eine Arbeitsplatzumgebung 101 basierend auf einer Emulation der zumindest einen Arbeitsplatzumgebung 101 zu erkennen.

Der Vorteil eines solchen Netzwerksicherheitssystems liegt darin, dass durch das Emulieren der Arbeitsplatzumgebung durch das Netzwerksicherheitselement ein Angreifer dazu verleitet wird, seinen Angriff auf das Netzwerksicherheitselement zu richten, so dass die reale Arbeitsplatzumgebung geschützt ist. Der Netzwerkverkehr an dem Netzwerksicherheitselement kann daher erfasst und ausgewertet werden. Der Vorteil eines solchen Netzwerksicherheitssystems liegt daher in der schützenden Wirkung bezüglich der realen Arbeitsplatzumgebung als auch in der schnellen Reaktionsfähigkeit, einen Angriff auf eine Arbeitsplatzumgebung zu erkennen.

Gemäß einer Ausführungsform umfasst das Netzwerksicherheitselement folgendes: einen Emulator, der ausgelegt ist, die zumindest eine Arbeitsumgebung elektronisch zu emulieren; eine Erfassungseinheit, die ausgelegt ist, Netzwerkverkehr an dem Netzwerksicherheitselement zu erfassen; und eine Angriffswarneinheit, die ausgelegt ist, den erfassten Netzwerkverkehr mit einem vorgegebenen Netzwerkverkehr zu vergleichen und bei einer Abweichung zwischen dem erfassten Netzwerkverkehr und dem vorgegebenen Netzwerkverkehr ein erstes Angriffswarnsignal auszulösen.

Der Vorteil eines solchen Netzwerksicherheitssystems liegt darin, dass das Vergleichen des erfassten Netzwerkverkehrs mit einem vorgegebenen Netzwerkverkehr eine einfache und zuverlässige Möglichkeit bietet, um eine Unregelmäßigkeit zu erkennen, die auf einen Angriff hindeutet. Das Auslösen des ersten Angriffswarnsignals kann so schnell ausgeführt werden, dass der Nutzer nicht von dem Angriff überrascht wird oder ihn erst zu spät erkennt, so dass er ausreichend Zeit hat, entsprechende Vorsichtsmaßnahmen zu treffen.

Gemäß einer Ausführungsform umfasst das Netzwerksicherheitssystem ein Netzwerküberwachungselement, das mit dem Netzwerkverbindungselement verbunden ist, wobei das Netzwerküberwachungselement ausgelegt ist, einen Netzwerkverkehr an dem Netzwerkverbindungselement zu erfassen und bei Erkennung einer Anomalie in dem an dem Netzwerkverbindungselement erfassten Netzwerkverkehr ein zweites Angriffswarnsignal auszulösen.

Dies hat den Vorteil, dass ein zweites Angriffswarnsignal unabhängig von dem ersten Angriffswarnsignal erzeugt wird und damit die Erkennung eines Angriffs noch zuverlässiger ausgeführt wird. Das zweite Angriffswarnsignal basiert auf der Erkennung einer Anomalie in dem Netzwerkverkehr an dem Netzwerkverbindungselement, d.h. dem übergeordneten Netzwerkverkehr, während das erste Angriffswarnsignal auf dem Vergleich des arbeitsplatzbezogenen Netzwerkverkehrs an dem Netzwerksicherheitselement mit einem vorgegebenen Netzwerkverkehr, d.h. einem Referenznetzwerkverkehr basiert.

Gemäß einer Ausführungsform umfasst das Netzwerksicherheitssystem einen Protokollserver, der ausgelegt ist, basierend auf dem ersten Angriffswarnsignal und dem zweiten Angriffswarnsignal eine Warnmeldung zu erzeugen, und den erfassten Netzwerkverkehr an dem Netzwerksicherheitselement und den erfassten Netzwerkverkehr an dem Netzwerkverbindungselement zu protokollieren und basierend auf dem protokollierten Netzwerkverkehr eine charakteristische Eigenschaft des Angriffs zu erkennen.

Dies hat den Vorteil, dass bei Protokollieren des an beiden Netzwerkelementen erfassten Netzwerkverkehrs dieser für weitere Analysen zur Verfügung steht. Damit kann die Analyse des Angriffsmusters genauer ausgeführt werden und es können zuverlässigere Vorhersagen bezüglich zukünftiger Angriffe gemacht werden. Ferner können die charakteristischen Eigenschaften des Angriffs dazu genutzt werden, um weitere Angriffe, welche auf derselben Angriffscharakteristik basieren, leicht und ohne großen Aufwand zu erkennen. Die Erfindung wird durch Verfahrensanspruch 1 und System Anspruch 8 und deren abhängige Ansprüche definiert.

Weitere Ausführungsbeispiele werden Bezug nehmend auf die beiliegenden Zeichnungen erläutert. Es zeigen:
Fig. 1 eine schematische Darstellung eines Netzwerksicherheitssystems 100 gemäß einer Ausführungsform;
Fig. 2 eine schematische Darstellung eines Netzwerksicherheitselements 103 gemäß einer Ausführungsform;
Fig. 3 eine schematische Darstellung eines Netzwerküberwachungselements 107 gemäß einer Ausführungsform;
Fig. 4 eine schematische Darstellung eines Protokollservers 109 gemäß einer Ausführungsform;
Fig. 5 eine schematische Darstellung eines Verfahrens 500 zum Erkennen eines Angriffs auf eine Arbeitsumgebung gemäß einer Ausführungsform; und
Fig. 6 eine schematische Darstellung eines Verfahrens 600 zum Erkennen eines Angriffs auf eine Arbeitsumgebung gemäß einer weiteren Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

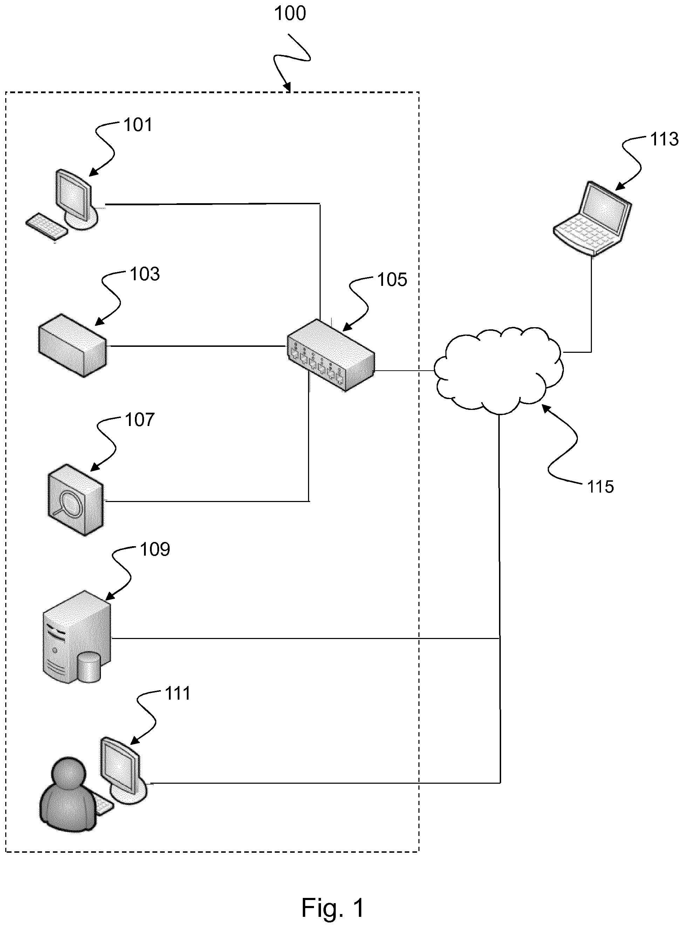

Fig. 1 zeigt eine schematische Darstellung eines Netzwerksicherheitssystems 100 gemäß einer Ausführungsform.

Das Netzwerksicherheitssystem 100 umfasst ein Netzwerkverbindungselement 105, das dazu dient, eine Verbindung mit einem Kommunikationsnetz 115 herzustellen sowie ein mit dem Netzwerkverbindungselement 105 verbundenes Netzwerksicherheitselement 103. Zumindest eine Arbeitsumgebung 101 ist mit dem Netzwerkverbindungselement 103 verbindbar bzw. kann mit dem Netzwerkverbindungselement 103 verbunden werden, um die zumindest eine Arbeitsumgebung 101 mit dem Kommunikationsnetz 115 zu verbinden.

Das Netzwerkverbindungselement 105 kann die Arbeitsumgebung 101, das Netzwerksicherheitselement 103 und das Netzwerküberwachungselement 107 mit dem Kommunikationsnetz 115 verbinden. Das Netzwerkverbindungselement 105 kann beispielsweise ein Switch, ein Gateway oder ein Router sein, wobei über verschiedene Ports die verschiedenen Netzwerkelemente an den Switch, das Gateway oder den Router angeschlossen werden können und entsprechend weitergeleitet werden können. Die Art der Weiterleitung kann über entsprechende Routerprotokolle bzw. Gatewayprotokolle oder Switcheinstellungen konfiguriert werden.

Das Netzwerksicherheitselement dient dazu, einen Angriff auf die zumindest eine Arbeitsplatzumgebung 101 basierend auf einer Emulation der zumindest einen Arbeitsplatzumgebung 101 zu erkennen. Es kann sich dabei um eine Arbeitsplatzumgebung 101 oder um mehrere verschiedene solcher Arbeitsplatzumgebungen 101 handeln.

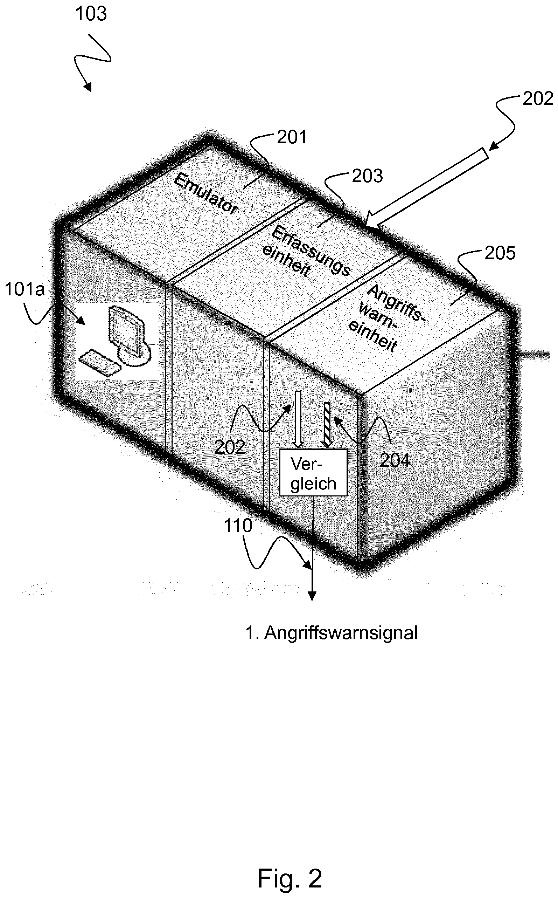

Das Netzwerksicherheitselement 103 kann so aufgebaut sein, wie unten in Fig. 2 näher beschrieben. Das Netzwerksicherheitselement 103 kann einen Emulator 201, eine Erfassungseinheit 203 und eine Angriffswarneinheit 205 aufweisen. Mit dem Emulator 201 kann die zumindest eine Arbeitsumgebung 101 elektronisch emuliert werden. Mit der Erfassungseinheit 203 kann Netzwerkverkehr 202 an dem Netzwerksicherheitselement 103 erfasst werden. Mit der Angriffswarneinheit 205 kann der erfasste Netzwerkverkehr 202 mit einem vorgegebenen Netzwerkverkehr 204 verglichen werden und bei einer Abweichung zwischen dem erfassten Netzwerkverkehr 202 und dem vorgegebenen Netzwerkverkehr 204 ein erstes Angriffswarnsignal 110 ausgelöst werden.

Die Arbeitsumgebung 101 kann ein Rechnersystem in einem Computernetzwerk sein, das für einen individuellen Nutzer oder eine individuelle Nutzergruppe eingerichtet ist. Beispielsweise kann die Arbeitsumgebung einem Mitarbeiter eines Unternehmens zugewiesen sein damit dieser seine unternehmensbezogenen Aufgaben darauf verrichten kann. Die Arbeitsumgebung kann einen oder mehrere Arbeitsplatzrechner umfassen, beispielsweise einen PC, eine Workstation, ein Notebook, ein PDA, ein Smartphone oder andere Arten von Rechnern bzw. Prozessoren. Das Kommunikationsnetzwerk 115 kann ein drahtgebundenes Netzwerk sein, beispielsweise ein Ethernet-, USB- oder Kabelnetzwerk. Das Kommunikationsnetzwerk 115 kann ein drahtloses Netzwerk sein, beispielsweise eine WLAN-, WiFi-, Bluetooth-, Infrarot-Netzwerk oder ein Kommunikationsnetzwerk eines Mobilfunkstandards wie beispielsweise LTE, UMTS, GSM, etc.

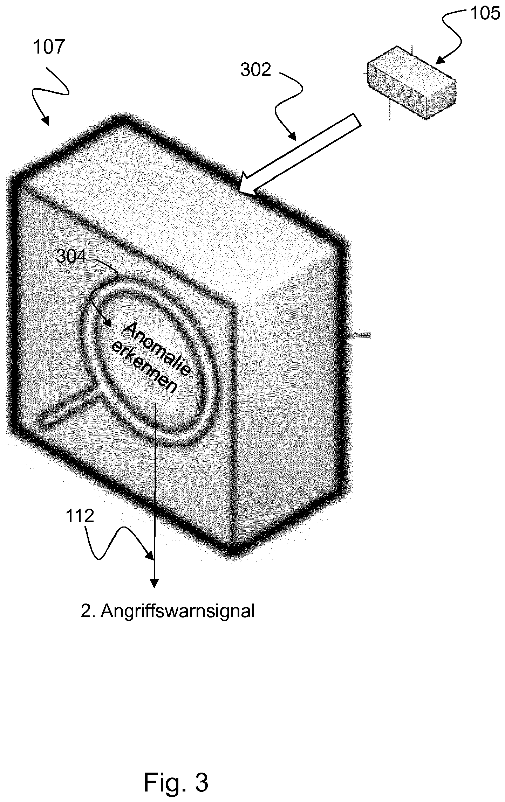

Das Netzwerksicherheitssystem 100 kann ferner ein Netzwerküberwachungselement 107 aufweisen. Das Netzwerküberwachungselement 107 kann so aufgebaut sein, wie unten in Fig. 3 näher beschrieben. Das Netzwerküberwachungselement 107 kann dazu dienen, einen Netzwerkverkehr 302 an dem Netzwerkverbindungselement 105 zu erfassen und bei Erkennung einer Anomalie 304 in dem an dem Netzwerkverbindungselement 105 erfassten Netzwerkverkehr 302 ein zweites Angriffswarnsignal 112 auszulösen.

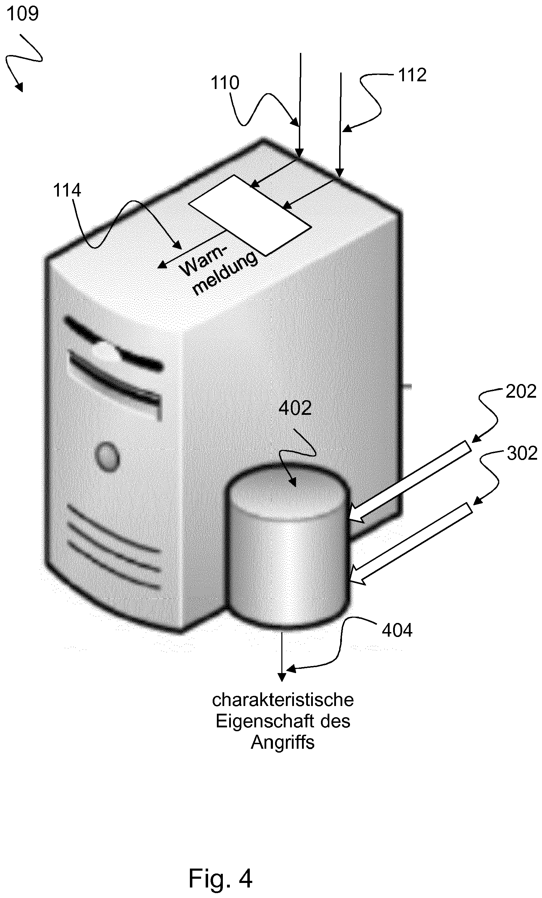

Das Netzwerksicherheitssystem 100 kann ferner einen Protokollserver 109 aufweisen, der beispielsweise so aufgebaut sein kann, wie unten in Fig. 4 näher beschrieben. Der Protokollserver 109 kann basierend auf dem ersten Angriffswarnsignal 110 und dem zweiten Angriffswarnsignal 112 eine Warnmeldung 114 erzeugen. Der Protokollserver 109 kann den erfassten Netzwerkverkehr 202 an dem Netzwerksicherheitselement 103 und den erfassten Netzwerkverkehr 302 an dem Netzwerkverbindungselement 105 protokollieren und basierend auf dem protokollierten Netzwerkverkehr 402 eine charakteristische Eigenschaft 404 des Angriffs erkennen.

Durch das Emulieren der Arbeitsplatzumgebung 101 durch das Netzwerksicherheitselement 103 soll ein Angreifer 113 dazu verleitet werden, seinen Angriff auf das Netzwerksicherheitselement 103 zu richten, so dass die reale Arbeitsplatzumgebung 101 geschützt ist. Der Netzwerkverkehr an dem Netzwerksicherheitselement 103 kann von diesem effizient erfasst und ausgewertet werden. Damit wird eine schützende Wirkung bezüglich der realen Arbeitsplatzumgebung 101 erzielt. Das Netzwerksicherheitselement 103 kann mit schnellen Prozessoren ausgerüstet sein, die es dem Netzwerksicherheitselement 103 erlauben, sehr schnell einen Angriff auf die Arbeitsplatzumgebung 101 zu erkennen.

Ein Verfahren zur Erkennung eines Angriffs kann dabei wie im Folgenden beschrieben ablaufen:
1. Ein (interner) Angreifer 113 untersucht das Netzwerk 115 nach angreifbaren Zielen;
2. Der Arbeitsplatz bzw. die Arbeitsumgebung 101 ist geschützt;
3. Das Netzwerksicherheitselement 103 simuliert einen ungeschützten Arbeitsplatz und lenkt den Angreifer 113 auf sich;
4a. Der Angreifer 113 findet in (3) ein angreifbares Ziel in einem interessanten Netzbereich, d.h. das Netzwerksicherheitselement 103;
4b. Das Netzwerküberwachungselement 107 erkennt anormale Suchvorgänge im Netzverkehr in Echtzeit und meldet diese zentral;
4c. Der Protokollserver 109 protokolliert eingehende Meldungen zu anormalen Suchvorgängen;
5a. Der Angreifer startet einen Einbruchsversuch in (3), d.h. in das Netzwerksicherheitselement 103;
5b. Das Netzwerksicherheitselement 103 erkennt einen Einbruchsversuch, zeichnet die Eingaben des Angreifers 113 in Echtzeit auf und meldet diese zentral; Das Netzwerküberwachungselement 107 erkennt Eigenschaften eines Angriffs im Netzverkehr und meldet diese zentral; Der Protokollserver 109 protokolliert eingehende Meldungen zu Eigenschaften eines Angriffs;
6. Der Protokollserver 109 bringt Meldungen von (5b), d.h. von dem Netzwerksicherheitselement 103 und dem Netzwerküberwachungselement 107, in Zusammenhang und generiert einen Warnbericht;
7. Der Sicherheitsanalyst analysiert in der Analyseeinrichtung 111 den Warnbericht, um geeignete Maßnahmen einzuleiten.

Fig. 2 zeigt eine schematische Darstellung eines Netzwerksicherheitselements 103 gemäß einer Ausführungsform.

Das Netzwerksicherheitselement 103 umfasst einen Emulator 201, eine Erfassungseinheit 203 und eine Angriffswarneinheit 205. Mit dem Emulator 201 kann die oben in Fig. 1 dargestellte Arbeitsumgebung 101 elektronisch emuliert werden, d.h. der Emulator 201 kann eine emulierte Arbeitsumgebung 101a generieren bzw. emulieren. Der Emulator 201 kann beispielsweise zumindest Teile der gleichen Software auf dem Netzwerksicherheitselement 103 installieren wie sie auf der Arbeitsumgebung 101 installiert sind. Der Angreifer 113 findet dann die gleiche Software auf dem Netzwerksicherheitselement 103 vor und denkt, es handele sich um eine für ihn interessante Arbeitsplatzumgebung 101. Damit wird dem Angreifer 113 vorgetäuscht, dass es sich bei dem Netzwerksicherheitselement 103 um eine reale Arbeitsumgebung 101 handelt, um ihn zu veranlassen, seine Angriffsaktivitäten fortzusetzen, so dass seine Spuren verfolgt werden können. Der Angreifer 113 wird somit seine Aktivitäten auf die Erforschung des Netzwerksicherheitselements 103 richten im Glauben es handele sich um eine reale Arbeitsplatzumgebung 101.

Mit der Erfassungseinheit 203 kann Netzwerkverkehr 202 an dem Netzwerksicherheitselement 103 erfasst werden. Mit der Angriffswarneinheit 205 kann der erfasste Netzwerkverkehr 202 mit einem vorgegebenen Netzwerkverkehr 204 verglichen werden und bei einer Abweichung zwischen dem erfassten Netzwerkverkehr 202 und dem vorgegebenen Netzwerkverkehr 204 ein erstes Angriffswarnsignal 110 ausgelöst werden. Das Erfassen des Netzwerkverkehrs 202 an dem Netzwerksicherheitselement 103 kann beispielsweise durch das Erfassen einer Zugriffsrate auf das Netzwerksicherheitselement 103 realisiert sein. Die so erfasste Zugriffsrate kann dann mit einer vorgegebenen Zugriffsrate verglichen werden.

Die vorgegebene Zugriffsrate kann leicht bestimmt werden, beispielsweise indem Aktivitäten eines typischen Nutzers der Arbeitsumgebung 101 statistisch ausgewertet werden. Erfolgt ein Angriff auf die Arbeitsumgebung 101 bzw. auf das Netzwerksicherheitselement 103, so erhöht sich die Zugriffsrate in signifikanter Weise, was leicht und zuverlässig festgestellt werden kann.

Fig. 3 zeigt eine schematische Darstellung eines Netzwerküberwachungselements 107 gemäß einer Ausführungsform.

Das Netzwerküberwachungselement 107 ist mit dem Netzwerkverbindungselement 105 verbunden und kann den Netzwerkverkehr 302 an dem Netzwerkverbindungselement 105 erfassen. Der gesamte Netzwerkverkehr von und zu der Arbeitsumgebung 101 kann somit über das Netzwerkverbindungselement 105 laufen, von wo er leicht kopiert werden kann und dem Netzwerküberwachungselement 107 zur weiteren Auswertung zugeführt werden kann. Damit können alle Aktivitäten des Angreifers 113, die auf die Arbeitsumgebung 101 gerichtet sind, von dem Netzwerküberwachungselement 107 erfasst werden.

Bei Erkennung einer Anomalie 304 in dem an dem Netzwerkverbindungselement 105 erfassten Netzwerkverkehr 302 kann das Netzwerküberwachungselement ein zweites Angriffswarnsignal 112 auslösen. Das zweite Angriffswarnsignal 112 kann somit unabhängig von dem ersten Angriffswarnsignal 110 erzeugt werden, so dass die Erkennung eines Angriffs noch zuverlässiger ausgeführt werden kann. Das zweite Angriffswarnsignal 112 kann auf der Erkennung einer Anomalie in dem Netzwerkverkehr an dem Netzwerkverbindungselement, d.h. dem übergeordneten Netzwerkverkehr basieren, während das erste Angriffswarnsignal 110 auf dem Vergleich des arbeitsplatzbezogenen Netzwerkverkehrs an dem Netzwerksicherheitselement mit einem vorgegebenen Netzwerkverkehr, d.h. einem Referenznetzwerkverkehr basieren kann.

Das Erkennen der Anomalie 304 kann durch ein Detektieren von anormalen Suchvorgängen in dem erfassten Netzwerkverkehr 302 realisiert sein. Das Erkennen anormaler Suchvorgänge kann zuverlässig auf einen stattfindenden oder bevorstehenden Angriff hinweisen. Die Computer eines Computernetzwerks erzeugen stets eine Vielzahl von Warnmeldungen, beispielsweise bei nicht funktionierendem Software-Update, wenn der Prozessor überlastet ist, wenn ein Update der Software bisher nicht durchgeführt wurde, wenn ein Passwort falsch eingegeben wurde, wenn der Zugriff auf das Internet vorübergehend nicht möglich ist, wenn der Zugriff auf bestimmte Daten nicht möglich ist, etc. Diese Warnmeldungen sind bedingt durch bestimmte Anomalien des Computernetzwerks, die während des Betriebs häufiger oder weniger häufig vorkommen und zumeist eine Interaktion des Benutzers erfordern, um sie zu beheben. Bei anormalen Suchvorgängen dagegen handelt es sich nicht um typische Funktionen des Systems. Sie sind als kritisch zu beurteilen und deuten auf einen Missbrauch des Computers hin. Anhand so erkannter anormaler Suchvorgänge kann zuverlässig ein Angriff detektiert werden.

Das Netzwerküberwachungselement 107 kann eine Erfassungseinheit, beispielsweise einen Speicher, aufweisen, mit dem der Netzwerkverkehr 302 an dem Netzwerkverbindungselement 105 erfasst werden kann. Das Netzwerküberwachungselement 107 kann eine Detektionseinheit aufweisen, beispielsweise einen Datenkorrelator, um eine Anomalie 304 in dem an dem Netzwerkverbindungselement 105 erfassten Netzwerkverkehr 302 zu erkennen, beispielsweise durch Anwendung von Korrelationsverfahren. Das Netzwerküberwachungselement 107 kann eine Warneinheit aufweisen, mit der bei Erkennung einer Anomalie 304 ein Angriffswarnsignal 112 erzeugt werden kann. Das Netzwerküberwachungselement 107 kann eine Meldeschnittstelle aufweisen, über die das Angriffswarnsignal 112 an weitere Komponenten im Netzwerksicherheitssystem 100 weitergeleitet werden kann, beispielsweise wie in Fig. 1 gezeigt über das Netzwerkverbindungselement 105 und das Kommunikationsnetz 115 an den Protokollserver 109 und/oder die Analyseeinrichtung 111 oder wie nicht in Fig. 1 gezeigt über eine eigene Schnittstelle unter Umgehung des Kommunikationsnetzes 115 an den Protokollserver 109 und/oder die Analyseeinrichtung 111.

Fig. 4 zeigt eine schematische Darstellung eines Protokollservers 109 gemäß einer Ausführungsform.

Der Protokollserver 109 kann basierend auf dem ersten Angriffswarnsignal 110 und dem zweiten Angriffswarnsignal 112 eine Warnmeldung 114 erzeugen. Der Protokollserver 109 kann den erfassten Netzwerkverkehr 202 an dem Netzwerksicherheitselement 103 und den erfassten Netzwerkverkehr 302 an dem Netzwerkverbindungselement 105 protokollieren, beispielsweise in einem Protokollspeicher, und basierend auf dem protokollierten Netzwerkverkehr 402 eine charakteristische Eigenschaft 404 des Angriffs erkennen.

Durch das Protokollieren des an beiden Netzwerkelementen 103, 105 erfassten Netzwerkverkehrs 202, 302 steht dieser für weitere Analysen zur Verfügung. Damit kann die Analyse des Angriffsmusters genauer ausgeführt werden und es können zuverlässigere Vorhersagen bezüglich zukünftiger Angriffe gemacht werden. Durch den Protokollserver 109 erkannte charakteristische Eigenschaften des Angriffs können dazu genutzt werden, um weitere Angriffe, welche auf derselben Angriffscharakteristik basieren, leicht und ohne großen Aufwand zu erkennen.

Die von dem Protokollserver 109 aufgezeichneten Protokolle und von dem Protokollserver 109 ermittelten charakteristischen Eigenschaften 404 des Angriffs können einer Analyseeinrichtung 111, wie in Fig. 1 dargestellt, zur Verfügung gestellt werden.

Die Analyseeinrichtung 111 kann beispielsweise als SIEM (Security Information and Event Management bzw. Sicherheitsinformations- und Ereignisverwaltung) System realisiert sein. Die Analyseeinrichtung 111 kann beispielsweise Sicherheitsinformationsverwaltung ("security information management", SIM) mit Sicherheitsereignisverwaltung ("security event management", SEM) kombinieren und eine Echtzeitanalyse von Sicherheitsalarmen realisieren. Die Analyseeinrichtung 111 und/oder der Protokollserver 109 können dazu verwendet werden, um sicherheitsrelevante Daten aufzuzeichnen und Reporte für Compliance Anwendungen zu erzeugen.

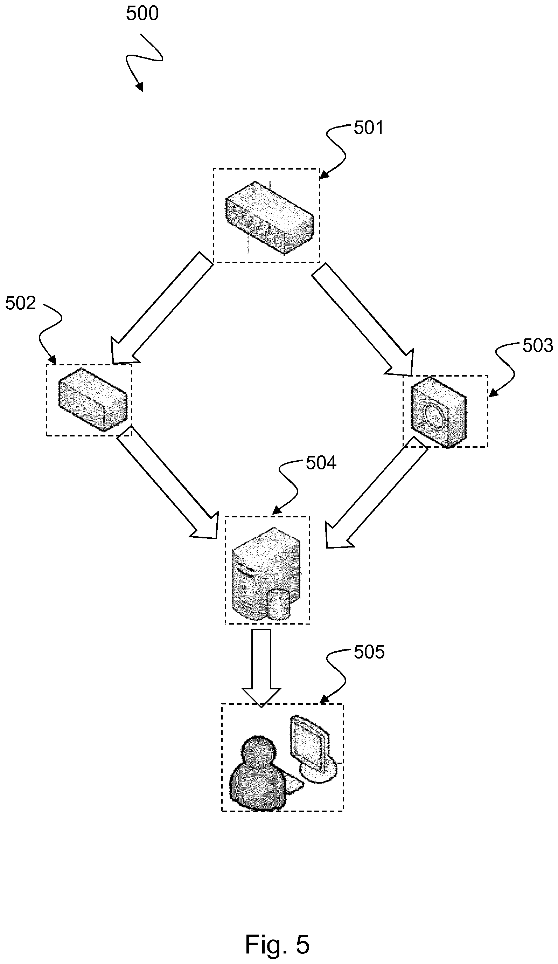

Fig. 5 zeigt eine schematische Darstellung eines Verfahrens 500 zum Erkennen eines Angriffs auf eine Arbeitsumgebung gemäß einer Ausführungsform.

Das Verfahren 500 kann in einem ersten Verfahrensschritt 501 ein Konfigurieren eines Netzwerkverbindungselements, beispielsweise ein Netzwerkverbindungselement 105 gemäß der Beschreibung zu Fig. 1 umfassen. An dem Netzwerkverbindungselement 105 können geschützte Arbeitsplatzsysteme angeschlossen sein, beispielsweise Arbeitsplatzsysteme 101 gemäß der Darstellung in Fig. 1, die für einen Angreifer 113 interessant sein können. Die Konfiguration des Netzwerkverbindungselements 105 kann vorsehen, dass sämtlicher "Traffic", d.h. Netzwerkverkehr, auf einen Port kopiert wird, an dem ein Netzwerküberwachungselement beispielsweise ein Netzwerküberwachungselement 107 gemäß der Darstellung von Fig. 1, angeschlossen ist

Alternativ kann das Verfahren 500 bereits mit konfiguriertem Netzwerkverbindungselement ausgeführt werden.

Das Verfahren 500 kann in einem zweiten Verfahrensschritt 502 eine Simulation eines Arbeitsplatzsystems, beispielsweise einer Arbeitsumgebung 101 gemäß der Beschreibung zu Fig. 1, durch ein Netzwerksicherheitselement 103 umfassen. Die Simulation eines ungeschützten Arbeitsplatzsystems soll von den geschützten Arbeitsplatzsystemen ablenken und einen Angreifer auf sich lenken.

Das Verfahren 500 kann in einem dritten Verfahrensschritt 503 ein Prüfen des ein- und ausgehenden Netzwerkverkehrs umfassen, beispielsweise mit einem Netzwerküberwachungselement 107, wie in Fig. 1 detailliert beschrieben. Das Netzwerküberwachungselement 107 ist in der Lage, den ein- und ausgehenden Netzwerkverkehr vom Netzwerkverbindungselement 105 auf verdächtige Muster hin zu inspizieren.

Ist der Netzwerkverkehr verschlüsselt, stehen für die Analyse lediglich die Netzwerk- und Protokolldaten aus der Verbindung zur Verfügung. Der Inhalt eines durch die Übertragung verschlüsselten Datums kann dann weiter analysiert werden, wenn dem Netzwerküberwachungselement 107 die der Verbindung zugrundeliegenden Schlüsselinformationen zur Verfügung stehen.

Das Verfahren 500 kann in einem vierten Verfahrensschritt 504 eine Analyse und Warnberichterstattung umfassen. Wird ein Einbruchsversuch durch das Netzwerksicherheitselement 103 erkannt, können die Eingaben des Angreifers protokolliert und zentral erfasst werden. Werden verdächtige Muster durch das Netzwerküberwachungselement 107 entdeckt, können Alarme generiert werden und an ein zentrales System zur Konsolidierung weitergeleitet werden, beispielsweise den Protokollserver 109, wie in den Figuren 1 und 4 beschrieben.

Durch die Kombination der Simulation eines ungeschützten Arbeitsplatzes mit einem Netzwerküberwachungselement und der zentralen Protokollierung ist es nun zentral möglich, die Ereignisse in einen kausalen Zusammenhang zu bringen und Rückschlüsse auf den Angreifer zu ziehen.

Meldungen aus anderen Netzwerkbereichen nach gleichem Aufbau können zentral gesammelt werden. Je mehr Daten in dieser Form erhoben werden können, desto qualitativer ist die Aussage zu einem erfolgten Angriff, d.h. Falscherhebungen können reduziert werden.

Das Verfahren 500 kann in einem fünften Verfahrensschritt 505 eine Einleitung geeigneter Maßnahmen durch einen Sicherheitsanalysten umfassen. Der Sicherheitsanalyst kann automatisiert eine Warnmeldung erhalten, beispielsweise in Form einer eMail, SMS, App, etc. und kann geeignete Maßnahmen daraufhin einleiten.

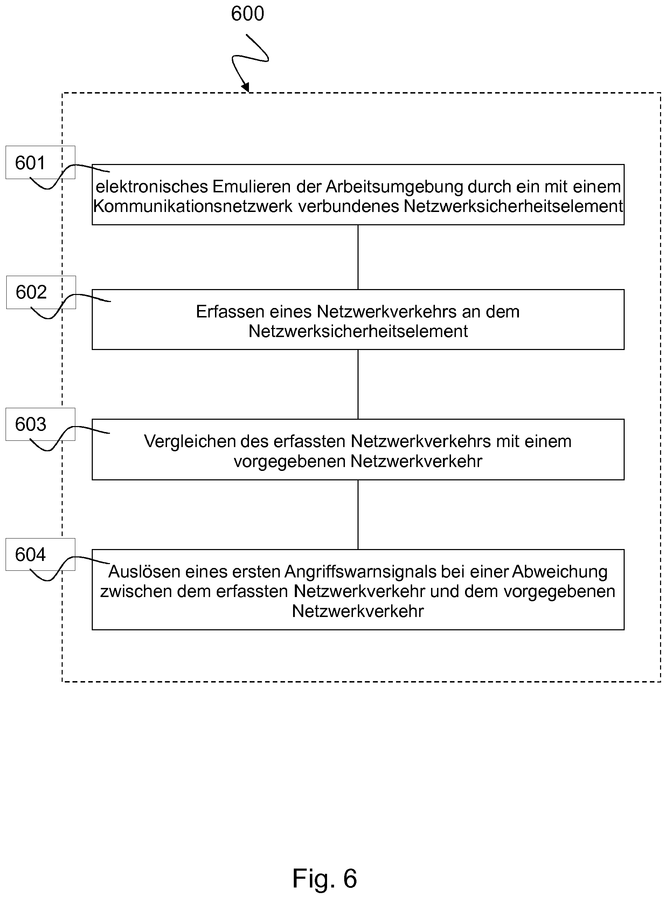

Fig. 6 zeigt eine schematische Darstellung eines Verfahrens 600 zum Erkennen eines Angriffs auf eine mit einem Kommunikationsnetzwerk 115 verbundene Arbeitsumgebung, beispielsweise eine Arbeitsumgebung 101 wie in Fig. 1 dargestellt, gemäß einer weiteren Ausführungsform.

Das Verfahren 600 umfasst ein elektronisches Emulieren 601 der Arbeitsumgebung 101 durch ein mit dem Kommunikationsnetzwerk 115 verbundenes Netzwerksicherheitselement, beispielsweise ein Netzwerksicherheitselement 103 wie in Fig. 1 dargestellt. Das Verfahren 600 umfasst ein Erfassen 602 eines Netzwerkverkehrs 202 an dem Netzwerksicherheitselement 103. Das Verfahren 600 umfasst ein Vergleichen 603 des erfassten Netzwerkverkehrs 202 mit einem vorgegebenen Netzwerkverkehr 204. Das Verfahren 600 umfasst ein Auslösen 604 eines ersten Angriffswarnsignals 110 bei einer Abweichung zwischen dem erfassten Netzwerkverkehr 202 und dem vorgegebenen Netzwerkverkehr 204, beispielsweise gemäß der Beschreibung zu den Figuren 1 und 2.

Das Erfassen 602 des Netzwerkverkehrs kann ein Erfassen einer Zugriffsrate auf das Netzwerksicherheitselement 103 umfassen. Das Vergleichen 603 des erfassten Netzwerkverkehrs 202 mit dem vorgegebenen Netzwerkverkehr 204 kann ein Vergleichen der erfassten Zugriffsrate mit einer vorgegebenen Zugriffsrate umfassen.

Das elektronische Emulieren 601 der Arbeitsumgebung 101 kann ein Emulieren einer ungeschützten Arbeitsumgebung 101a umfassen, die zumindest Teile der gleichen Software umfasst wie auf der Arbeitsumgebung 101 installiert sind.

Zwischen die Arbeitsumgebung 101 und das Kommunikationsnetzwerk 115 kann ein Netzwerkverbindungselement 105 zwischengeschaltet sein, beispielsweise gemäß der Darstellung in Fig. 1, und an das Netzwerkverbindungselement 105 kann ein Netzwerküberwachungselement 107 angeschaltet sein. Das Verfahren 600 kann ein Kopieren eines Netzwerkverkehrs an dem Netzwerkverbindungselement 105 zu dem Netzwerküberwachungselement 107 umfassen.

Das Verfahren 600 kann ferner ein Erfassen des Netzwerkverkehrs 302 an dem Netzwerkverbindungselement 105 durch das Netzwerküberwachungselement 107 umfassen; und ein Auslösen eines zweiten Angriffswarnsignals 112 bei Erkennung einer Anomalie 304, beispielsweise gemäß der Beschreibung zu Fig. 3, in dem an dem Netzwerkverbindungselement 105 erfassten Netzwerkverkehr 302. Das Erkennen der Anomalie 304 kann auf einem Detektieren von anormalen Suchvorgängen in dem erfassten Netzwerkverkehr 302 basieren.

Das Verfahren 600 kann ferner ein Aufzeichnen des an dem Netzwerkverbindungselement 105 erfassten Netzwerkverkehrs 302 in Echtzeit bei Erkennung der Anomalie 304 umfassen. Das Verfahren 600 kann ein Erzeugen einer Warnmeldung 114 basierend auf dem ersten Angriffswarnsignal 110 und dem zweiten Angriffswarnsignal 112 umfassen, beispielsweise gemäß der Beschreibung zu den Figuren 1 bis 3. Das Erzeugen der Warnmeldung 114 kann ferner auf weiteren Angriffswarnsignalen von weiteren Arbeitsumgebungen des Kommunikationsnetzwerks 115 basieren.

Das Verfahren 600 kann ferner ein Protokollieren des erfassten Netzwerkverkehrs 202 an dem Netzwerksicherheitselement 103 durch einen Protokollserver 109 bei Auslösen des ersten Angriffswarnsignals 110 umfassen, beispielsweise gemäß der Beschreibung zu den Figuren 1 und 4. Das Verfahren 600 kann ein Protokollieren des erfassten Netzwerkverkehrs 302 an dem Netzwerkverbindungselement 105 durch den Protokollserver 109 bei Auslösen des zweiten Angriffswarnsignals 112 umfassen, , beispielsweise gemäß der Beschreibung zu den Figuren 1 und 4. Das Verfahren 600 kann ferner ein Erkennen von charakteristischen Eigenschaften 404 des Angriffs basierend auf dem protokollierten Netzwerkverkehr 202 an dem Netzwerksicherheitselement 103 und dem protokollierten Netzwerkverkehr 302 an dem Netzwerkverbindungselement 105 umfassen.

Das Verfahren 600 beschreibt eine Verallgemeinerung der am Ende der Beschreibung zu Fig. 1 erläuterten Verfahrensschritte 1 bis 7 sowie des in Fig. 5 beschriebenen Verfahrens 500.

Ein Aspekt der Erfindung umfasst auch ein Computerprogrammprodukt, das direkt in den internen Speicher eines digitalen Computers geladen werden kann und Softwarecodeabschnitte umfasst, mit denen das zu Fig. 5 oder Fig. 6 beschriebene Verfahren 500, 600 ausgeführt werden kann, wenn das Produkt auf einem Computer läuft. Das Computerprogrammprodukt kann auf einem computergeeigneten Medium gespeichert sein und folgendes umfassen: computerlesbare Programmittel, die einen Computer veranlassen, eine Arbeitsumgebung durch ein mit dem Kommunikationsnetzwerk verbundenes Netzwerksicherheitselement elektronisch zu emulieren 601; einen Netzwerkverkehrs an dem Netzwerksicherheitselement zu erfassen 602; den erfassten Netzwerkverkehrs mit einem vorgegebenen Netzwerkverkehr zu vergleichen 603; und eine erstes Angriffswarnsignal bei einer Abweichung zwischen dem erfassten Netzwerkverkehr und dem vorgegebenen Netzwerkverkehr auszulösen 604. Der Computer kann ein PC sein, beispielsweise ein PC eines Computernetzwerks. Der Computer kann als ein Chip, ein ASIC, ein Mikroprozessor oder ein Signalprozessor realisiert sein und in einem Computernetzwerk, beispielsweise einem Computernetzwerk wie in den Figuren 1 bis 4 beschrieben, angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

### Bezugszeichenliste

- 100:: Netzwerksicherheitssystem
- 101:: Arbeitsumgebung
- 101a:: emulierte Arbeitsumgebung
- 103:: Netzwerksicherheitselement
- 105:: Netzwerkverbindungselement
- 107:: Netzwerküberwachungselement
- 109:: Protokollserver
- 110:: erstes Angriffswarnsignal
- 111:: Analyseeinrichtung
- 112:: zweites Angriffswarnsignal
- 113:: Angreifer
- 114:: Warnmeldung
- 115:: Kommunikationsnetzwerk

- 201:: Emulator
- 203:: Erfassungseinheit
- 205:: Angriffswarneinheit
- 202:: erfasster Netzwerkverkehr an dem Netzwerksicherheitselement
- 204:: vorgegebener Netzwerkverkehr

- 302:: erfasster Netzwerkverkehr an dem Netzwerkverbindungselement
- 304:: Anomalie

- 402:: protokollierter Netzwerkverkehr
- 404:: charakteristischen Eigenschaften des Angriffs

- 500:: Verfahren zum Erkennen eines Angriffs auf eine Arbeitsumgebung
- 501:: erster Verfahrensschritt: Konfiguration des Netzwerkverbindungselements
- 502:: zweiter Verfahrensschritt: Simulation eines Arbeitsplatzsystems
- 503:: dritter Verfahrensschritt: Prüfen des ein- und ausgehenden Netzwerkverkehrs
- 504:: vierter Verfahrensschritt: Analyse und Warnberichterstattung
- 505:: fünfter Verfahrensschritt: Einleitung geeigneter Maßnahmen durch Sicherheitsanalyst

- 600:: Verfahren zum Erkennen eines Angriffs auf eine Arbeitsumgebung
- 601:: erster Verfahrensschritt: elektronisches Emulieren der Arbeitsumgebung
- 602:: zweiter Verfahrensschritt: Erfassen eines Netzwerkverkehrs an dem Netzwerksicherheitselement
- 603:: dritter Verfahrensschritt: Vergleichen des erfassten Netzwerkverkehrs mit einem vorgegebenen Netzwerkverkehr
- 604:: vierter Verfahrensschritt: Auslösen eines ersten Angriffswarnsignals

## Patentansprüche

1. Verfahren (600) zum Erkennen eines Angriffs auf eine mit einem Kommunikationsnetzwerk (115) verbundene Arbeitsumgebung (101), wobei zwischen die Arbeitsumgebung (101) und das Kommunikationsnetzwerk (115) ein Netzwerkverbindungselement (105) zwischengeschaltet ist, und wobei an das Netzwerkverbindungselement (105) ein Netzwerküberwachungselement (107) angeschaltet ist, mit folgenden Schritten:
elektronisches Emulieren (601) der Arbeitsumgebung (101) durch ein mit dem Kommunikationsnetzwerk (115) verbundenes Netzwerksicherheitselement (103);
Erfassen (602) eines Netzwerkverkehrs (202) an dem Netzwerksicherheitselement (103);
Vergleichen (603) des erfassten Netzwerkverkehrs (202) mit einem vorgegebenen Netzwerkverkehr (204);
Auslösen (604) eines ersten Angriffswarnsignals (110) durch das Netzwerksicherheitselement (103) bei einer Abweichung zwischen dem erfassten Netzwerkverkehr (202) und dem vorgegebenen Netzwerkverkehr (204);
Kopieren eines Netzwerkverkehrs an dem Netzwerkverbindungselement (105) zu dem Netzwerküberwachungselement (107);
Erfassen des Netzwerkverkehrs (302) an dem Netzwerkverbindungselement (105) durch das Netzwerküberwachungselement (107); und
Auslösen eines zweiten Angriffswarnsignals (112) durch das Netzwerküberwachungsselement (107) bei Erkennung einer Anomalie (304) in dem an dem Netzwerkverbindungselement (105) erfassten Netzwerkverkehr (302);
Erzeugen einer Warnmeldung (114) basierend auf dem ersten Angriffswarnsignal (110) und dem zweiten Angriffswarnsignal (112);
wobei das Erzeugen der Warnmeldung (114) ferner basiert auf weiteren Angriffswarnsignalen von weiteren Arbeitsumgebungen des Kommunikationsnetzwerks (115).

2. Verfahren (600) nach Anspruch 1,
wobei das Erfassen (602) des Netzwerkverkehrs (202) ein Erfassen einer Zugriffsrate auf das Netzwerksicherheitselement (103) umfasst; und
wobei das Vergleichen (603) des erfassten Netzwerkverkehrs (202) mit dem vorgegebenen Netzwerkverkehr (204) ein Vergleichen der erfassten Zugriffsrate mit einer vorgegebenen Zugriffsrate umfasst.

3. Verfahren (600) nach Anspruch 1 oder 2,
wobei das elektronische Emulieren (601) der Arbeitsumgebung (101) ein Emulieren einer ungeschützten Arbeitsumgebung (101a) umfasst, die zumindest Teile der gleichen Software umfasst wie auf der Arbeitsumgebung (101) installiert sind.

4. Verfahren (600) nach einem der vorstehenden Ansprüche,
wobei das Erkennen der Anomalie (304) auf einem Detektieren von anormalen Suchvorgängen in dem erfassten Netzwerkverkehr (302) basiert.

5. Verfahren (600) nach einem der vorstehenden Ansprüche, umfassend:
Aufzeichnen des an dem Netzwerkverbindungselement (105) erfassten Netzwerkverkehrs (302) in Echtzeit bei Erkennung der Anomalie (304).

6. Verfahren (600) nach einem der vorstehenden Ansprüche, ferner umfassend:
Protokollieren des erfassten Netzwerkverkehrs (202) an dem Netzwerksicherheitselement (103) durch einen Protokollserver (109) bei Auslösen des ersten Angriffswarnsignals (110); und
Protokollieren des erfassten Netzwerkverkehrs (302) an dem Netzwerkverbindungselement (105) durch den Protokollserver (109) bei Auslösen des zweiten Angriffswarnsignals (112).

7. Verfahren (600) nach Anspruch 6, umfassend:
Erkennen von charakteristischen Eigenschaften (404) des Angriffs basierend auf dem protokollierten Netzwerkverkehr (202) an dem Netzwerksicherheitselement (103) und dem protokollierten Netzwerkverkehr (302) an dem Netzwerkverbindungselement (105).

8. Netzwerksicherheitssystem (100), mit:
einem Netzwerkverbindungselement (105), das ausgelegt ist, eine Verbindung mit einem Kommunikationsnetz (115) herzustellen; und
einem mit dem Netzwerkverbindungselement (105) verbundenen Netzwerksicherheitselement (103),
wobei zumindest eine Arbeitsumgebung (101) mit dem Netzwerkverbindungselement (105) verbunden ist, um die zumindest eine Arbeitsumgebung (101) mit dem Kommunikationsnetz (115) zu verbinden, und
wobei das Netzwerksicherheitselement (103) ausgelegt ist, einen Angriff auf die zumindest eine Arbeitsplatzumgebung (101) basierend auf einer Emulation der zumindest einen Arbeitsplatzumgebung (101) zu erkennen, wobei das Netzwerksicherheitselement (103) folgendes umfasst:
einen Emulator (201), der ausgelegt ist, die zumindest eine Arbeitsumgebung (101) elektronisch zu emulieren;
eine Erfassungseinheit (203), die ausgelegt ist, den Netzwerkverkehr (202) an dem Netzwerksicherheitselement (103) zu erfassen; und
eine Angriffswarneinheit (205), die ausgelegt ist, den erfassten Netzwerkverkehr (202) mit einem vorgegebenen Netzwerkverkehr (204) zu vergleichen und bei einer Abweichung zwischen dem erfassten Netzwerkverkehr (202) und dem vorgegebenen Netzwerkverkehr (204) das erste Angriffswarnsignal (110) auszulösen, und ferner mit:
einem Netzwerküberwachungselement (107), das mit dem Netzwerkverbindungselement (105) verbunden ist,
wobei das Netzwerküberwachungselement (107) ausgelegt ist, einen Netzwerkverkehr (302) an dem Netzwerkverbindungselement (105) zu erfassen und bei Erkennung einer Anomalie (304) in dem an dem Netzwerkverbindungselement (105) erfassten Netzwerkverkehr (302) ein zweites Angriffswarnsignal (112) auszulösen; und
wobei das Netzwerksicherheitssystem ausgelegt ist, eine Warnmeldung (114) basierend auf dem ersten Angriffswarnsignal (110), dem zweiten Angriffswarnsignal und weiteren Angriffswarnsignalen von weiteren Arbeitsumgebungen des Kommunikationsnetzwerks (115) zu erzeugen.

9. Netzwerksicherheitssystem (100) nach Anspruch 8, mit:
einem Protokollserver (109), der ausgelegt ist,
basierend auf dem ersten Angriffswarnsignal (110) und dem zweiten Angriffswarnsignal (112) eine Warnmeldung (114) zu erzeugen, und den erfassten Netzwerkverkehr (202) an dem Netzwerksicherheitselement (103) und den erfassten Netzwerkverkehr (302) an dem Netzwerkverbindungselement (105) zu protokollieren und basierend auf dem protokollierten Netzwerkverkehr (402) eine charakteristische Eigenschaft (404) des Angriffs zu erkennen.

## Claims

1. Method (600) for detecting an attack on a work environment (101) connected to a communication network (115), wherein a network connection element (105) is interposed between the work environment (101) and the communication network (115), and wherein a network monitoring element (107) is connected to the network connection element (105), having the following steps of:
electronically emulating (601) the work environment (101) by means of a network security element (103) connected to the communication network (115) ;
capturing (602) network traffic (202) at the network security element (103);
comparing (603) the captured network traffic (202) with predefined network traffic (204);
triggering (604) a first attack warning signal (110) by means of the network security element (103) in the event of a discrepancy between the captured network traffic (202) and the predefined network traffic (204);
copying network traffic at the network connection element (105) to the network monitoring element (107);
capturing the network traffic (302) at the network connection element (105) by means of the network monitoring element (107); and
triggering a second attack warning signal (112) by means of the network monitoring element (107) if an anomaly (304) is detected in the network traffic (302) captured at the network connection element (105);
generating a warning message (114) on the basis of the first attack warning signal (110) and the second attack warning signal (112);
wherein the generation of the warning message (114) is also based on further attack warning signals from further work environments of the communication network (115).

2. Method (600) according to Claim 1,
wherein the capture (602) of the network traffic (202) comprises capturing an access rate to the network security element (103); and
wherein the comparison (603) of the captured network traffic (202) with the predefined network traffic (204) comprises comparing the captured access rate with a predefined access rate.

3. Method (600) according to Claim 1 or 2,
wherein the electronic emulation (601) of the work environment (101) comprises emulating an unprotected work environment (101a) which comprises at least parts of the same software as those installed in the work environment (101).

4. Method (600) according to one of the preceding claims,
wherein the detection of the anomaly (304) is based on detecting abnormal search operations in the captured network traffic (302).

5. Method (600) according to one of the preceding claims, comprising:
recording the network traffic (302) captured at the network connection element (105) in real time if the anomaly (304) is detected.

6. Method (600) according to one of the preceding claims, also comprising:
logging the captured network traffic (202) at the network security element (103) by means of a log server (109) if the first attack warning signal (110) is triggered; and
logging the captured network traffic (302) at the network connection element (105) by means of the log server (109) if the second attack warning signal (112) is triggered.

7. Method (600) according to Claim 6, comprising:
detecting characteristic properties (404) of the attack on the basis of the logged network traffic (202) at the network security element (103) and the logged network traffic (302) at the network connection element (105) .

8. Network security system (100) having:
a network connection element (105) which is designed to establish a connection to a communication network (115); and
a network security element (103) which is connected to the network connection element (105),
wherein at least one work environment (101) is connected to the network connection element (105) in order to connect the at least one work environment (101) to the communication network (115), and
wherein the network security element (103) is designed to detect an attack on the at least one workstation environment (101) on the basis of an emulation of the at least one workstation environment (101), wherein the network security element (103) comprises the following:
an emulator (201) which is designed to electronically emulate the at least one work environment (101);
a capture unit (203) which is designed to capture the network traffic (202) at the network security element (103); and
an attack warning unit (205) which is designed to compare the captured network traffic (202) with predefined network traffic (204) and to trigger the first attack warning signal (110) in the event of a discrepancy between the captured network traffic (202) and the predefined network traffic (204), and also having:
a network monitoring element (107) which is connected to the network connection element (105), wherein the network monitoring element (107) is designed to capture network traffic (302) at the network connection element (105) and to trigger a second attack warning signal (112) if an anomaly (304) is detected in the network traffic (302) captured at the network connection element (105); and
wherein the network security system is designed to generate a warning message (114) on the basis of the first attack warning signal (110), the second attack warning signal and further attack warning signals from further work environments of the communication network (115) .

9. Network security system (100) according to Claim 8, having:
a log server (109) which is designed
to generate a warning message (114) on the basis of the first attack warning signal (110) and the second attack warning signal (112) and to log the captured network traffic (202) at the network security element (103) and the captured network traffic (302) at the network connection element (105) and to detect a characteristic property (404) of the attack on the basis of the logged network traffic (402).

## Revendications

1. Procédé (600) de reconnaissance d'une attaque dans un environnement de travail (101) connecté à un réseau de communication (115), dans lequel un élément de connexion de réseau (105) est interposé entre l'environnement de travail (101) et le réseau de communication (115), et dans lequel un élément de surveillance de réseau (107) est connecté à l'élément de connexion de réseau (105), comprenant les étapes suivantes :
l'émulation électronique (601) de l'environnement de travail (101) par un élément de sécurité réseau (103) connecté au réseau de communication (115) ;
la détection (602) du trafic réseau (202) au niveau de l'élément de sécurité réseau (103) ;
la comparaison (603) du trafic réseau détecté (202) à un trafic réseau prédéterminé (204) ;
le déclenchement (604) d'un premier signal d'avertissement d'attaque (110) par l'élément de sécurité réseau (103) lors d'un écart entre le trafic réseau détecté (202) et le trafic réseau prédéterminé (204) ;
la recopie d'un trafic réseau au niveau de l'élément de connexion de réseau (105) vers l'élément de surveillance de réseau (107) ;
la détection du trafic réseau (302) au niveau de l'élément de connexion de réseau (105) par l'élément de surveillance de réseau (107) ; et
le déclenchement d'un second signal d'avertissement d'attaque (112) par l'élément de surveillance de réseau (107) lors de la reconnaissance d'une anomalie (304) dans le trafic réseau détecté (302) au niveau de l'élément de connexion de réseau (105) ;
la génération d'un message d'avertissement (114) sur la base du premier signal d'avertissement d'attaque (110) et du second signal d'avertissement d'attaque (112) ;
dans lequel la génération du message d'alerte (114) est en outre basée sur d'autres signaux d'avertissement d'attaque provenant d'autres environnements de travail du réseau de communication (115).

2. Procédé (600) selon la revendication 1,
dans lequel la détection (602) du trafic réseau (202) comprend une détection d'un taux d'accès à l'élément de sécurité réseau (103) ; et
dans lequel la comparaison (603) du trafic réseau détecté (202) au trafic réseau prédéterminé (204) comprend la comparaison du taux d'accès détecté à un taux d'accès prédéterminé.

3. Procédé (600) selon la revendication 1 ou 2,
dans lequel l'émulation électronique (601) de l'environnement de travail (101) comprend une émulation d'un environnement de travail non protégé (101a) comprenant au moins des parties du même logiciel que celui installé sur l'environnement de travail (101).

4. Procédé (600) selon l'une des revendications précédentes,
dans lequel la détection de l'anomalie (304) est basée sur la détection d'opérations de recherche anormales dans le trafic réseau détecté (302).

5. Procédé (600) selon l'une des revendications précédentes comprenant :
l'enregistrement en temps réel du trafic réseau détecté (302) au niveau de l'élément de connexion de réseau (105) lors de la détection de l'anomalie (304).

6. Procédé (600) selon l'une des revendications précédentes, comprenant en outre :
la journalisation du trafic réseau détecté (202) au niveau de l'élément de sécurité réseau (103) par un serveur de protocole (109) lors du déclenchement du premier signal d'avertissement d'attaque (110) ; et
la journalisation du trafic réseau détecté (302) au niveau de l'élément de connexion de réseau (105) par le serveur de protocole (109) lors du déclenchement du second signal d'avertissement d'attaque (112).

7. Procédé (600) selon la revendication 6 comprenant :
la détection de propriétés caractéristiques (404) de l'attaque sur la base du trafic réseau journalisé (202) au niveau de l'élément de sécurité réseau (103) et du trafic réseau journalisé (302) au niveau de l'élément de connexion de réseau (105).

8. Système de sécurité réseau (100), comprenant :
un élément de connexion de réseau (105) conçu pour établir une connexion à un réseau de communication (115) ; et
un élément de sécurité réseau (103) connecté audit élément de connexion de réseau (105),
dans lequel au moins un environnement de travail (101) est connecté à l'élément de connexion de réseau (105) pour connecter ledit au moins un environnement de travail (101) au réseau de communication (115), et dans lequel l'élément de sécurité réseau (103) est conçu pour reconnaître une attaque d'au moins un environnement de poste de travail (101) sur la base d'une émulation dudit au moins un environnement de poste de travail (101), dans lequel l'élément de sécurité réseau (103) comprend :
un émulateur (201) conçu pour émuler électroniquement ledit au moins un environnement de travail (101) ;
une unité de détection (203) conçue pour détecter le trafic réseau (202) au niveau de l'élément de sécurité réseau (103) ; et
une unité d'avertissement d'attaque (205) conçue pour comparer le trafic réseau détecté (202) à un trafic réseau prédéterminé (204) et pour déclencher le premier signal d'avertissement d'attaque (110) lors d'un écart entre le trafic réseau détecté (202) et le trafic réseau prédéterminé (204), et comprenant en outre :
un élément de surveillance de réseau (107) connecté à l'élément de connexion de réseau (105), dans lequel l'élément de surveillance de réseau (107) est conçu pour détecter un trafic réseau (302) au niveau de l'élément de connexion de réseau (105) et, lors de la détection d'une anomalie (304) dans le trafic réseau détecté (302) au niveau de l'élément de connexion de réseau (105), pour déclencher un second signal d'avertissement d'attaque (112) ; et
dans lequel le système de sécurité réseau est conçu pour générer un message d'avertissement (114) sur la base du premier signal d'avertissement d'attaque (110),
du second signal d'avertissement d'attaque et d'autres signaux d'avertissement d'attaque provenant d'autres environnements de travail du réseau de communication (115) .

9. Système de sécurité réseau (100) selon la revendication 8, comprenant :
un serveur de protocole (109) conçu pour générer un message d'avertissement (114) sur la base du premier signal d'avertissement d'attaque (110) et du second signal d'avertissement d'attaque (112), et pour journaliser le trafic réseau détecté (202) au niveau de l'élément de sécurité réseau (103) et le trafic réseau détecté (302) au niveau de l'élément de connexion de réseau (105) et reconnaître une propriété caractéristique (404) de l'attaque en fonction du trafic réseau journalisé (402).
